# EUROPÄISCHE PATENTANMELDUNG

(11) **EP 0 562 412 A2**
(43) Veröffentlichungstag der Anmeldung: **29.09.1993**
(21) Anmeldenummer: 93104206.3
(22) Anmeldetag: 16.03.1993
(51) Int. Cl.: B01D 46/00, B01D 39/20, F01N 3/02

(54) **Verfahren und Vorrichtung zum Abscheiden von Russpartikeln aus einem Abgasstrom**

(30) Priorität: 26.03.1992 DE 4209793
(71) Anmelder: Schwäbische Hüttenwerke GmbH, D-73414 Aalen (DE)
(72) Erfinder: Haerle, Hans A., Dipl.-Ing., W-7085 Bopfingen (DE)
(74) Vertreter: Lorenz, Werner, Dipl.-Ing.

(57) **Zusammenfassung**

Bei einem Verfahren zum Abscheiden von Rußpartikeln aus einem Abgasstrom, insbesondere aus dem Abgas eines stationären Verbrennungsmotores, strömt das Abgas zur Rußabscheidung zwischen Abscheideplatten hindurch. Die Durchströmung erfolgt dabei durch mehrere grobporige Platten (1) aus einem Geflecht, Gewirr oder Gestrick von Fasern (3). Unter Verringerung des freien Porenquerschnittes legen sich Rußpartikel an den Fasern (3) an, von denen sie sich bei zunehmender Schichtdicke wieder in Form von größeren Partikeln ablösen. Diese Partikel, die größer als die auf die Platte (1) auftreffenden Rußpartikel sind, werden nachfolgend aus dem Abgasstrom abgeschieden.

## Beschreibung

Die Erfindung betrifft ein Verfahren und eine Vorrichtung zum Abscheiden von Rußpartikeln aus einem Abgasstrom, insbesondere aus dem Abgas eines stationären Verbrennungsmotores, wobei das Abgas zur Rußabscheidung zwischen Abscheideplatten strömt, und die sich von den Abscheideplatten ablösenden Rußpartikel nachfolgend von dem Abgasstrom getrennt werden.

Neben der chemischen Umwandlung bzw. dem Abbrennen von Ruß in Rußfiltern oder Katalysatoren ist es auch bekannt, in dem Abgasstrom Platten anzuordnen, an denen der Abgasstrom entlangstreicht, wobei sich auf den Oberflächen der Platten die Rußpartikel abscheiden. Dabei bildet sich eine entsprechende Schichtdicke aus Ruß auf den Platten. Von Zeit zu Zeit löst sich ein Konglomerat von zusammengebackenen Rußpartikeln von den Platten ab und wird mit dem Abgasstrom mitgerissen. Die auf diese Weise vergrößerten und schwereren Rußpartikel, die sich in Form von Plättchen bzw. als Konglomerat ablösen, können dadurch aus dem Abgasstrom aufgrund ihrer größeren Form und/oder des Gewichtes entfernt werden. Dies kann z.B. durch zentrifugieren erfolgen.

Nachteilig bei dem bekannten Verfahren mit den Blechplatten ist jedoch, daß sich an diesen zu wenig Ruß anlagert, und daß die Ablösung von größeren Rußpartikeln unregelmäßig bzw. diskontinuierlich erfolgt, wodurch der Gesamtabscheidegrad sehr niedrig ist.

Der vorliegenden Erfindung liegt daher die Aufgabe zugrunde, ein Verfahren und eine Vorrichtung zum Abscheiden von Rußpartikeln aus einem Abgasstrom zu schaffen, wobei der Gesamtabscheide- bzw. Wirkungsgrad besser ist.

Erfindungsgemäß wird diese Aufgabe dadurch gelöst, daß der Abgasstrom durch mehrere grobporige Platten aus einem Geflecht, Gewirr oder Gestrick von Fasern hindurchströmt, wobei sich die Rußpartikel unter Verringerung des freien Porenquerschnittes an den Fasern anlegen, von denen sie sich bei zunehmender Reduzierung des freien Porenquerschnittes in einer Partikelgröße wieder ablösen, die größer ist als die auf die Platte auftreffenden Rußpartikel, wonach die abgelösten Partikel aus dem Abgasstrom abgeschieden werden.

Durch die Verwendung von grobporigen Platten in dem erfindungsgemäßen Aufbau und durch die gewählte Strömungsart, bei der eine Durchströmung der Platten an Stelle einer einfachen Vorbeiströmung wie beim Stand der Technik stattfindet, wird eine deutlich bessere Rußablagerung an bzw. in den Platten und eine deutlich bessere Abscheidung ermöglicht. Dieses Ergebnis beruht in Verbindung mit der Ausgestaltung der Platte auch auf physikalischen Gesetzen bezüglich Gasdruck und Geschwindigkeit. Der Erfinder ging nämlich von der erfinderischen Erkenntnis aus, daß mit zunehmender Rußablagerung an den Fasern der freie Porenquerschnitt immer kleiner wird. Dadurch steigt der Gasgegendruck und die Geschwindigkeit in jeder Pore entsprechend an. Bei einem bestimmten Gleichgewichtszustand werden dann größere Rußpartikel aus den Poren herausgerissen und mit dem Gasstrom abgeführt. Anschließend können sich wieder Rußpartikel an den Fasern ansetzen, bis wieder der Gasgegendruck und die Geschwindigkeit so groß werden, daß erneut Rußpartikelplättchen vom Abgasstrom mitgerissen werden.

Versuche haben gezeigt, daß sich mit dem erfindungsgemäßen Verfahren nicht nur mehr Rußpartikel an den Fasern anlegen, sondern daß sich auch aufgrund der Durchströmung der Platte und der zahlreichen Fasern und Poren Rußpartikel viel gleichmäßiger von den Fasern lösen, wobei insgesamt fast eine kontinuierliche Abscheidung erfolgt. Auf diese Weise läßt sich auch eine nachgeschaltete Abtrennung der abgelösten Rußpartikel aus dem Abgasstrom wesentlich besser durchführen. So läßt sich z.B. eine Zentrifuge viel gleichmäßiger betreiben, und damit eine gleichmäßigere Rußabscheidung erreichen.

Als weiterer Vorteil hat sich herausgestellt, daß durch die Verwendung des Fasermateriales darüber hinaus eine sehr hohe spezifische Oberfläche vorhanden ist, welche den Abscheidegrad von Rußpartikeln noch erhöht.

Eine erfindungsgemäße Vorrichtung zur Durchführung des Verfahrens kann darin bestehen, daß mehrere grobporige Platten im Abgasstrom angeordnet werden, und die von dem Abgas durchströmt sind, wobei die Platten aus einem Geflecht, Gewirr oder Gestrick von Fasern gebildet sind.

In einer konstruktiven Ausgestaltung kann dabei vorgesehen sein, daß mehrere Platten parallel nebeneinander angeordnet sind, wobei benachbart liegende Platten zur Bildung von Einlaß- und Auslaßkanälen so zueinander angeordnet oder so ausgebildet sind, daß die gebildeten Kanäle jeweils auf einer Stirnseite geschlossen und auf der anderen Stirnseite offen sind, wobei die Platten von dem Abgas quer durchströmt sind.

Durch eine entsprechende Zusammensetzung der einzelnen Platten werden auf diese Weise jeweils zwischen zwei benachbart liegenden Platten Einlaß- und Auslaßkanäle gebildet, und der Abgasstrom ist gezwungen, durch die Wände der Platten hindurchzuströmen, um von der Eingangsseite zur Ausgangsseite zu gelangen.

Versuche haben gezeigt, daß sich Maschen- bzw. Porenweiten in der Platte von 0,2 bis 0,4 mm, vorzugsweise 0,3 mm, als besonders geeignet erwiesen haben.

Die Durchmesser der Fäden können im einem Bereich von 0,05 bis 1 mm, vorzugsweise zwischen 0,1 und 0,5 mm, liegen. Sehr gute Werte haben sich bei Durchmessern von 0,3 mm gezeigt.

Als Material für die Platten wird man im allgemeinen Metall, vorzugsweise Stahl bzw. Eisen mit Legierungszusätzen, verwenden.

Wenn man eine entsprechende Stabilität bzw. Festigkeit erreichen möchte, ist es von Vorteil, wenn die Fasern der Platten miteinander versintert sind. Zusammen mit dieser Versinterung, oder auch getrennt davon, können die einzelnen Platten wiederum ebenfalls in einem Sintervorgang miteinander verbunden werden, wodurch auf einfache Weise ein einheitlicher Körper zum Abscheiden von Rußpartikeln geschaffen wird.

Möchte man noch weitere schädliche Bestandteile aus dem Abgas entfernen, so kann man durch eine Ein- bzw. Aufbringung von Legierungszusätzen auf die bzw. in die Platten katalytische Wirkungen erzeugen. Hierfür sind die bekannten Werkstoffe geeignet, wie z.B. Chrom, Platin, Vanadium, Mangan, Molybdän u.dgl.

Zur Erhöhung der Oberfläche jeder Platte können diese gegebenenfalls auch noch mit pulverförmigen oder granulatförmigen Materialien dotiert werden. Ebenso können die Legierungsbestandteile in dieser Form aufgebracht werden. Die Dotierung kann z.B. ebenfalls durch einen Sintervorgang erfolgen.

Nachfolgend ist ein Ausführungsbeispiel der Erfindung anhand der Zeichnung prinzipmäßig beschrieben.

Es zeigt:
- Fig. 1: einen Schnitt durch die erfindungsgemäße Vorrichtung in schematischer Darstellung;
- Fig. 2: eine Ausschnittvergrößerung von zwei nebeneinander liegenden Fasern.

Grundsätzlich können die grobporigen Platten, die aus einem Geflecht, Gewirr oder Gestrick von Metallfasern bestehen, von beliebiger Bauart sein. In einer einfachen Ausgestaltung kann jedoch vorgesehen sein, daß eine Vielzahl von Platten 1 in Strömungsrichtung parallel übereinander angeordnet wird, wobei jeweils an einer Stirnseite ein Vorsprung 2 über die Plattenoberfläche in ungefähr der Dicke einer Platte vorsteht. Auf diese Weise ergibt sich eine L-Form jeder Platte, mit einem allerdings sehr kurzen unteren "L"-Balken bezogen auf die Länge. In jeder Platte 1 ist eine Vielzahl von Fasern 3 angeordnet, welche in einem isotropen oder auch einem nichtisotropen Gewirr die Platte 1 bilden. Statt einer unregelmäßigen Anordnung können die Fasern auch regelmäßig als Geflecht oder Gewirk angeordnet sein. Die Dicke der Fasern, welche eine bestimmte Länge besitzen oder auch endlos sein können, kann zwischen 0,05 und 1 mm, vorzugsweise zwischen 0,1 und 0,5 mm, betragen. Selbstverständlich ist es klar, daß mit "Fasern" auch dünne Drähte gemeint sind, die sich in den angegebenen Durchmesserbereichen befinden.

Setzt man nun die einzelnen L-förmigen Platten spiegelbildlich bzw. versetzt übereinander und zwar derart, daß jeweils das kurze untere Ende eines "L" an das obere Ende eines "L" an dessen Rückseite angesetzt ist, so ergeben sich zwischen jeweils zwei benachbart zueinander liegenden Platten 1 abwechselnd Einlaßkanäle 4 und Auslaßkanäle 5.

Mit anderen Worten bedeutet dies, daß in dem Körper Kanäle gebildet werden, die jeweils auf einer Stirnseite geschlossen und auf der anderen Stirnseite offen sind. Auf diese Weise wird das in Pfeilrichtung eintretende Abgas gezwungen, von den Einlaßkanälen 4 aus durch die diese begrenzenden Längswände der Platten hindurchzutreten, bevor es aus den Auslaßkanälen 5 wieder abströmen kann.

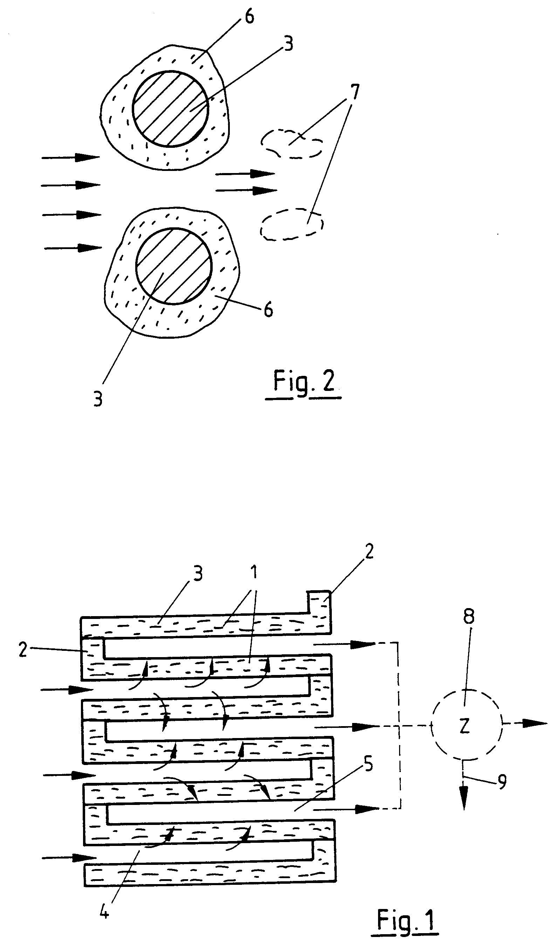

Beim Durchgang durch die Wände der Platten setzen sich die Rußpartikel an den Fasern 3 an und bauen eine die einzelnen Fasern umhüllende Rußpartikelschicht 6 auf (siehe Fig. 2). Durch diesen Schichtaufbau wird der freie Durchflußquerschnitt des Abgasstromes zwischen den einzelnen Fasern bzw. wird der Porenquerschnitt immer kleiner. Dadurch steigt der Gasgegendruck an diesen Stellen entsprechend an, gleichzeitig jedoch auch die Geschwindigkeit in diesem Bereich, so daß ab einer bestimmten Schichtdicke größere Partikelplättchen 7 (siehe gestrichelte Darstellung) aus der Rußpartikelschicht 6 herausgerissen und mit dem Abgasstrom fortgerissen werden. Die Rußpartikelplättchen 7 können in einer nachgeschalteten Zentrifuge 8 von dem Abgasstrom getrennt und z.B. über eine Auslaßleitung 9 von dem Abgasstrom abgetrennt werden (siehe Fig. 1).

## Patentansprüche

1. Verfahren zum Abscheiden von Rußpartikeln aus einem Abgasstrom, insbesondere aus dem Abgas eines stationären Verbrennungsmotores, wobei das Abgas zur Rußabscheidung zwischen Abscheideplatten strömt, und die sich von den Abscheideplatten ablösenden Rußpartikel nachfolgend von dem Abgasstrom getrennt werden,
**dadurch gekennzeichnet**, daß der Abgasstrom durch mehrere grobporige Platten (1) aus einem Geflecht, Gewirr oder Gestrick von Fasern hindurchströmt, wobei sich die Rußpartikel unter Verringerung des freien Porenquerschnittes an den Fasern (3) anlegen, von denen sie sich bei zunehmender Reduzierung des freien Porenquerschnittes in einer Partikelgröße wieder ablösen, die größer ist als die auf die Platte auftreffenden Rußpartikel, wonach die abgelösten Partikel aus dem Abgasstrom abgeschieden werden.

2. Vorrichtung zur Durchführung des Verfahrens nach Anspruch 1,
**gekennzeichnet** durch mehrere grobporige Platten (1), die im Abgasstrom angeordnet sind, und die von dem Abgas durchströmt sind, wobei die Platten aus einem Geflecht, Gewirr oder Gestrick von Fasern (3) gebildet sind.

3. Vorrichtung nach Anspruch 2,
**dadurch gekennzeichne**t, daß mehrere Platten (1) parallel nebeneinander angeordnet sind, wobei benachbart liegende Platten zur Bildung von Einlaß- und Auslaßkanälen (4,5) so zueinander angeordnet oder so ausgebildet sind, daß die gebildeten Kanäle jeweils auf einer Stirnseite geschlossen und auf der anderen Stirnseite offen sind, wobei die Platten von dem Abgas quer durchströmt sind.

4. Vorrichtung nach Anspruch 3,
**dadurch gekennzeichnet**, daß die Platten (1) wenigstens annähernd eine L-Form besitzen.

5. Vorrichtung nach Anspruch 3 oder 4,
**dadurch gekennzeichnet**, daß die Platten (1) Metallfasern (3) aufweisen.

6. Vorrichtung nach Anspruch 3, 4 oder 5,
**dadurch gekennzeichnet**, daß die Fasern (3) jeder Platte (1) miteinander versintert sind.

7. Vorrichtung nach Anspruch 6,
**dadurch gekennzeichnet**, daß die einzelnen Platten (1) zusammengesintert sind.

8. Vorrichtung nach einem der Ansprüche 2 bis 7,
**dadurch gekennzeichnet**, daß die Fasern (3) aus Eisen mit Legierungszusätzen gebildet sind.

9. Vorrichtung nach Anspruch 8,
**dadurch gekennzeichnet,** daß als Legierungszusätze Materialien vorgesehen sind, die katalytische Eigenschaften besitzen, wie Chrom, Vanadium, Platin, Mangan, Molybdän u.dgl.

10. Vorrichtung nach einem der Ansprüche 2 bis 9,
**dadurch gekennzeichnet,** daß in Abgasrichtung hinter den Platten (1) eine Zentrifuge (8) zum Abtrennen der Rußpartikelplättchen (7) aus dem Abgasstrom angeordnet ist.
